# EUROPEAN PATENT APPLICATION

(11) **EP 4 428 450 A1**
(43) Date of publication of application: **11.09.2024**
(21) Application number: 24162201.8
(22) Date of filing: 07.03.2024
(51) Int. Cl.: F24D 3/10, E03B 7/07, F16L 37/14

(54) **SAFETY GROUP FOR A PRESSURIZED HEATING DEVICE AND RELATED METHODS OF INSTALLATION AND REPLACEMENT**

(30) Priority: 10.03.2023 IT 202300004497
(71) Applicant: I.V.A.R. S.P.A., 25080 Prevalle (BS) (IT)
(72) Inventor: BERTOLOTTI, Umberto, 25080 Prevalle (BS) (IT); CONTINI, Mario, 25020 Flero (BS) (IT)
(74) Representative: PGA S.p.A.

(57) **Abstract**

The present invention is related to a safety group (1) for a pressurized heating device (B) connected to a water supply network (A) and comprises:
- a internally hollow main body (2) provided with a first opening (21), a second opening (22) and a third opening (23);
- a shut-off valve (3) openable and closable on command for interrupting the fluid communication between the first and the second opening;
- a nonreturn valve (4) which allows a fluid flow entering to the pressurized heating device from the second to the first opening and prevents a fluid flow in the opposite direction;
- a safety valve (5) configured for remaining closed when a pressure value in the pressurized heating device is lower than a determined risk threshold and for being open when said pressure value is higher or equal to the determined risk threshold;
- a first connection fitting (6) internally hollow and comprising a first passage (60) for the passage of the fluid between the first opening and the pressurized heating device; the first fitting is configured for being screwed to the pressurized heating device; the first opening comprises a first seat (S1) for housing the first fitting;
- a retainer element (7) associable in the first seat (S1) for keeping firmly housed the first fitting and preventing its leakage from the first seat.

## Description

The present invention has as its object a safety group for a pressurized heating device, in particular a pressurized electric heating device, such as for example an electric boiler, suitable for heating a fluid, typically water, to be supplied to one or more users.

The present invention has also as its object a method of installation of said safety group in correspondence of said pressurized heating device.

Another object of the present invention is a method of replacement of a safety group previously installed according to the above-mentioned method of installation of a safety group.

The invention finds advantageous application in the field of domestic water heating suitable for serving users of a space of residential and/or commercial type. In particular, the present invention lies in the technical field of safety devices suitable for being combined with a pressurized heating device, such as for example an electric boiler, sometimes generally referred to as an electric water heater.

In the context of spaces of residential and/or commercial type, the use of electric boilers, slangily referred to as water heaters, is known in order to heat the domestic water that can be supplied from faucets, showers or other water users located therein. These electric boilers represent a common alternative to gas boilers and are particularly appreciated for their ease of installation in almost any location in the space to be served and for their ease of maintenance.

Furthermore, such devices are particularly appreciated for their low purchase cost and because, unlike gas boilers, they do not require emission ducts.

The operating principle of such electric boilers provides for the heating, through appropriate electrical resistances, of cold domestic water that is drawn from the public water supply network. Specifically, the electric resistances are supplied with current, thus increasing their own temperature. When the domestic water comes into contact with the high-temperature resistances, there is a heat exchange that heats the domestic water itself. This heated water is stored in a tank, the capacity thereof varies depending on the boiler models, and kept at temperature while waiting for its future use.

In order to correctly utilize electric boilers, it is necessary for them to be at a determined operating pressure so that hot domestic water can be sent to the users who require it.

However, when the pressure inside the electric boiler reaches too high values, the elements that compose it are exposed to risks of malfunction and/or breakage. In the worst cases, excessive pressure values can cause the explosion of the electric boiler itself with consequent damages to the installation rooms and persons present therein.

Therefore, also as a result of legal requirements, electric boilers are generally provided with safety groups suitable for preventing excessively high-pressure values and the resulting risk of malfunction and/or explosion. Such safety groups are valve devices that are typically interposed between the electric boiler and the relative connection to the public water supply network. Such safety groups are configured for ensuring, on the one hand, the inflow of unheated domestic water from the public water supply network to the boiler and, on the other hand, the discharge of heated water, and the subsequent at least partial emptying of the tank, when the pressure value inside the boiler exceeds a determined risk threshold. The emptying of the boiler tank prevents the risk of explosions by bringing the pressure inside the boiler back within the normal operating range, which generally ranges from 300 kPa (3 bar) to 500 kPa (5 bar).

The safety groups are typically composed by a main body within which at least three openings are obtained. Specifically, the above-mentioned openings comprise at least:
- a first opening suitable for acting as a connection interface to the electric boiler;
- a second opening suitable for acting as a connection interface to the public water supply network;
- a third opening suitable for acting as a discharge, under environmental pressure, of heated domestic water. In addition, the main body is suitable for housing one or more valve elements. Typically, these valve elements comprise at least:
- a shut-off valve, preferably a ball valve, near the first opening and configured for blocking the inflow of domestic water from the water supply network to the boiler;
- a nonreturn valve, interposed between the first opening and the second opening and configured for preventing a water return, specifically of heated water, from the electric boiler to the water supply network;
- a safety valve, interposed between the second opening and the third opening, configured for opening when the pressure inside the boiler is higher than the above-mentioned determined risk threshold and for allowing the discharge of heated water from the third opening.

Actually, under normal operating conditions, i.e. when the pressure inside the boiler is within the operating range, the shut-off valve is open in order to allow the inflow of domestic water to be heated inside the electric boiler while the non-return valve prevents the flow of heated water in the opposite direction, i.e. from the boiler to the public water supply network. At the same time, since the pressure inside the boiler is below the risk threshold, the safety valve remains closed.

If the pressure value inside the boiler exceeds the risk threshold, the safety valve opens so as to allow the discharge of the heated water from the third discharge opening, emptying at least partially the tank and bringing it back below the risk threshold.

Although appreciated for the advantages related to the securing of electric heating devices, such as electric boilers, the Applicant noticed that known safety groups are not without drawbacks and can be improved in several respects.

First of all, the safety groups for known electric boilers are characterized by a particularly uncomfortable installation procedure. In fact, the traditional safety groups are composed by a body, typically made of brass, which is screwed to the electric boiler or to a conduit leading to it. The screwing of the safety group can be problematic since electric boilers or analogous heating devices are typically installed in narrow spaces and difficult for an installer to reach. In these situations, the screwing operations of the safety group and of application of Teflon or hydraulic hemp, optional but preferable, are particularly uncomfortable to carry out.

In addition, since the traditional safety groups are typically manufactured from brass, they are particularly complicated and expensive to produce. In fact, the production of traditional safety groups requires melting and casting operations of a particularly expensive metal.

Furthermore, with the known safety groups there is the risk of placing the entire hydraulic system under electrical voltage. In fact, since the boiler is made of metal material and is electrically powered, the materials of which traditional safety groups are composed generate a metal-to-metal junction that risks placing the entire system under voltage. In this regard, some known solutions comprise an insulating component that is interposed between the electric boiler and the main metal body of the safety group so as to electrically decouple them. However, such solutions involve a considerable additional structural complexity and are only used in high-end solutions, without overcoming the other typical problems of known safety groups.

Furthermore, over the years, various regulations have been introduced in some countries to regulate the installation and the periodic maintenance and/or replacement of safety groups in order to provide the necessary certification for the use of electric heating devices, such as boilers. For example, in some countries, it is required by law to replace the safety group associated with an electric boiler at constant intervals, e.g. every 5 years. Therefore, such regulations significantly shorten the life cycle of a safety group and have an impact on the operating costs of an electric boiler, for which the replacement costs of the safety group must also be considered. Given the constituting materials and the manpower required for the deinstallation of the old safety group and the installation of the new safety group, the maintenance costs of the electric boiler compensate, even only partially, for the lower cost assumed during the step of first installation and make these solutions less attractive with respect to common gas boilers.

In this situation, the purpose at the basis of the present invention, in its various aspects and/or embodiments, is to overcome one or more of the aforementioned drawbacks.

A first purpose of the present invention is to provide a safety group for a pressurized heating device which is particularly easy to install with respect to the known art solutions. In particular, the safety group according to the present invention considerably simplifies the relative operations of association, for example by means of screwing, to the pressurized heating device and to the public water supply network.

Another purpose of the present invention is to make available a safety group for a pressurized heating device which is particularly simple and cost-effective to produce with respect to known solutions. In particular, the purpose of the present invention is to ensure a safety group which is, at the same time, reliable in terms of pressure management of the associated heating device and which lowers production costs compared to commercially available solutions.

Yet another purpose of the present invention is to make available a safety group that eliminates the electrical risk associated with the contact with an electrically powered element such as the associated pressurized heating device.

Another purpose of the present invention is to make available a safety group which allows an easy and cost-effective replacement of a previously installed analogous safety group. In particular, the safety group according to the present invention allows to reduce waste and disposal costs of the expensive materials that constitute the known safety groups, as well as to make the operations of uninstallation of the safety group previously installed and installation of the new safety group particularly easy.

Another purpose of the present invention is to provide a safety group for a pressurized heating device with a simple and rational structure.

Another purpose of the present invention is to make available a method of installation of a safety group to a pressurized heating device which is simple and quick to implement. Specifically, the method of installation according to the invention is considerably easier and quicker with respect to the complex and articulated installation methods of safety groups of known type.

Yet another purpose of the present invention is to provide a method of replacement of a safety group previously installed according to said method of installation. Specifically, said method of replacement is considerably easier and faster with respect to known methods, as well as ensuring a lower waste of resources.

Another purpose of the present invention is to create alternative solutions, with respect to the known technique, in the realization of safety groups for pressurized heating devices and in the relative methods of installation and, subsequently, of replacement.

These purposes, and any others, which will become clearer in the following description, are substantially achieved by the safety group for a pressurized heating device, the relative method of installation and the corresponding method of replacement according to one or more of the attached claims, each of which is taken alone (without relative dependencies) or in any combination with the other claims, as well as according to the following aspects and/or embodiments, variously combined, also with the above-mentioned claims.

In a first aspect thereof, the invention concerns a safety group for a pressurized heating device, in particular a pressurized electric heating device, such as an electric boiler.

In the present description, with the expression "pressurized heating device" it is intended a device configured for heating a fluid, typically domestic water coming from a water supply network, and for storing this heated fluid in a suitable pressurized tank until a user, installed in the room supplied by said pressurized heating device, requires a determined quantity to provide a service. In the context of domestic water, typical examples of users using heated domestic water are represented by faucets, generally provided with mixers for the adjustment of the temperature of the water supplied through a mixing of the hot water coming from the pressurized heating device and the cold water supplied by a water supply network.

The present invention finds particular application in the context of electrical type pressurized heating devices, such as electric boilers, i.e. electrically powered pressurized heating devices, which typically use electrical resistances to transfer heat to the fluid to be heated and stored in the tank for future use.

In the context of the present invention, the safety group represents a safety device suitable for being combined to said pressurized heating device in order to prevent the occurrence of an excessive pressure inside the relative storage tank. If the pressure value inside said reservoir exceeds a corresponding risk value, the safety group is activated in order to lower this pressure value and to prevent malfunctions and/or explosions of the pressurized heating device to which it is combined.

According to an aspect, the safety group comprises an internally hollow main body. In particular, the main body comprises an internal cavity for fluid flow within the main body. As it will become clearer in the following description, the main body preferably represents the main portion of the safety group, wherein are housed the other components forming part of said safety group and which are configured to direct the fluid flow within the internal cavity of the main body.

According to an aspect, in said main body the following openings are obtained:
- a first opening suitable for being placed in fluid communication with said pressurized heating device;
- a second opening suitable for being placed in fluid communication with the water supply network of the fluid to be heated through said pressurized heating device;
- a third opening suitable for being placed in communication with an environment, preferably at atmospheric pressure, wherein it is installed said pressurized heating device.

In the context of the main body, the above-mentioned first, second and third openings are in fluid communication with each other, i.e. the internal cavity of the main body places the above-mentioned openings in fluid communication. In fact, the internal cavity is configured as an articulated channel that develops between the above-mentioned first opening, second opening and third opening. As it will become clearer in the following, the fluid communication between the above-mentioned openings is selectively interrupted by further components of the safety group that are housed in the inner cavity of the main body.

According to an aspect, the safety group comprises a shut-off valve interposed between said first opening and said second opening. Specifically, said shut-off valve is openable and closable on command for interrupting the fluid communication between said first opening and said second opening. Consequently, in accordance with this aspect, the shut-off valve is configured for selectively interrupting the fluid communication between said water supply network and said pressurized heating device.

According to an aspect, the safety group comprises a nonreturn valve interposed between said first opening and said second opening. Specifically, said nonreturn valve is configured for allowing a fluid flow entering said pressurized heating device from said second opening to said first opening and for preventing a fluid flow exiting from said pressurized heating device from said first opening to said second opening. In other words, the nonreturn valve is configured for allowing, through said main body, the fluid inflow from said water supply network to said pressurized heating device and for preventing the flow in the opposite direction, i.e. from said pressurized heating device to said water supply network. Considering the fluid flow from said water supply network to said pressurized heating device, i.e. from said second opening to said first opening, the nonreturn valve is preferably placed downstream of the shut-off valve. In other terms, preferably, the nonreturn valve is closer to the first opening with respect to the shut-off valve, which, on the other hand, is closer to the second opening.

According to an aspect, the safety group comprises a safety valve interposed between said first opening and said third opening for allowing or for selectively interrupting a fluid flow between the above-mentioned first opening and third opening. In particular, said safety valve is configured for remaining closed when a fluid pressure value at the first opening is lower than a determined risk threshold and for being open when said pressure value in said pressurized heating device is higher or equal to said determined risk threshold. It is noted that, by construction, the fluid pressure at the first opening corresponds to the pressure that occurs in said pressurized heating device. Therefore, the safety valve is configured for remaining closed when a fluid pressure value in said pressurized heating device is lower at a determined risk threshold and for being open when said pressure value in said pressurized heating device is higher or equal to said determined risk threshold. Specifically, the safety valve is configured for interrupting a fluid flow from the first opening to the third opening, i.e. from the pressurized heating device to the external environment, when the pressure value in the tank of said pressurized heating device is lower than said risk threshold. At the same time, the safety valve is configured for allowing a fluid flow from the first opening to the third opening, i.e. from the pressurized heating device to the external environment, when the pressure value in the tank of said pressurized heating device is higher or equal to the above-mentioned risk threshold.

It is noted that said shut-off valve, said nonreturn valve and said safety valve are, in fact, known in the field and, therefore, are not described in detail in the present document.

In principle, under normal operating conditions, i.e. when the fluid pressure at the first opening and, then, in the tank of said pressurized heating device is lower than the risk threshold, the safety group is configured for allowing a fluid flow only from the second opening to the first opening, i.e. a fluid flow entering said pressurized heating device from said water supply network. On the contrary, when the fluid pressure at the first opening and, then, in said tank reaches or exceeds the risk threshold, the safety valve opens and the safety group promotes the outflow of fluid from said heating device from said first opening and disperses this fluid into the external environment through the third opening, at the same time decreasing the pressure in the tank until it reaches a value lower than the risk threshold.

According to an aspect, the safety group comprises a first connection fitting. Said first fitting comprises a first passage for the fluid passage between said first opening and said pressurized heating device. In other words, the first fitting acts as an interface between the first opening of the main body of the safety group and the pressurized heating device.

According to an aspect, the first fitting is configured for being connected, preferably by means of screwing, to said pressurized heating device. It is noted that, according to the embodiment, the first fitting could be directly connected to the relative pressurized heating device or to a supply duct directly connected to said pressurized heating device, without this resulting in structural and/or functional changes of the safety group object of the present document.

According to an aspect, the main body of the safety group comprises a first seat in correspondence of said first opening. Said first seat is configured for removably housing said first fitting. In accordance to this aspect, the main body comprises the above-mentioned first seat, on which it is facing the first opening. When the first fitting is housed in said first seat, the first passage is in fluid communication with said first opening so as to allow a fluid flow between the main body of the safety group and the pressurized heating device.

According to an aspect, the safety group comprises a retainer element. This retainer element is configured for being selectively associated to said main body in correspondence of said first seat. In particular, when the first fitting is housed in said first seat, the retainer element is associated to said main body in correspondence of the first seat itself for keeping firmly housed said first fitting in the first seat itself and preventing an uncoupling between said first fitting and said main body.

According to another aspect, in a first embodiment, said main body of the safety group is made of plastic material.

According to other aspects, in accordance to other embodiments, the main body of the safety group is made of metal material, for example brass or steel.

According to another aspect, the first fitting is made of metal material, preferably brass. In an embodiment, the first fitting is made of lead-free brass.

According to yet another aspect, said retainer element is made of metal material, preferably steel.

According to another aspect, said first fitting comprises at least a first groove configured for housing at least a first sealing gasket. Preferably, said first fitting comprises at least two first grooves configured for housing at least two sealing gaskets. Said at least a first sealing gasket is suitable for preventing a fluid leakage between the first fitting and the walls of the first seat when the first fitting is housed in the above-mentioned first seat and is preferably kept firmly in position by said retainer element.

According to another aspect, said first fitting is selectively movable between a first extracted configuration, wherein it is extracted from said first seat, and a first inserted configuration, wherein it is at least partially inserted and housed in said first seat.

According to another aspect, when associated to said main body, the retainer element is configured for keeping firmly housed said first fitting in said first seat through an association by interference of parts when said first fitting is in said first inserted configuration.

According to yet another aspect, the insertion of the retainer element is in charge of avoiding the passage of the first fitting from the first inserted configuration to the first extracted configuration, but still allows relative rotations between the main body and the first fitting inserted in the relative first seat. In other words, the association by interference of parts between the first fitting and the main body only prevents axial movements of the first fitting within the first seat, but allows the first fitting itself to rotate relative to the main body within the corresponding first seat. In this sense, the possibility of relatively rotating the main body and the first fitting, even when the latter is kept in the first inserted configuration by the retainer element, allows to adjust the position of the safety group so as to better adapt to the orientation of the water supply network pipe to which it is connected. According to another aspect, when disassociated from said main body, the retainer element is configured for allowing a passage of said first fitting between said first inserted configuration and said first extracted configuration.

According to yet another aspect, said first seat presents at least a first notch for an insertion of said retainer element. Specifically, when said retainer element is inserted in said at least a first notch, said first fitting and said main body are between them associated by interference of parts.

According to another aspect, said first seat develops inside said main body for a depth suitable for housing at least partially said first fitting. In particular, the first seat represents a depression, or cavity, in the external surface of said main body having a depth sufficient to contain at least partially said first fitting, which, following the insertion of the retainer element in said at least one notch, is firmly kept within the first seat by interference of parts.

According to an aspect, representing a first embodiment of the safety group, said first fitting presents a longitudinal development substantially equal to said depth of the first seat. In other words, when the first fitting is housed in said first seat, it occupies the entire development in depth of the first seat. According to this aspect, when it is in said first inserted configuration, the first fitting is completely housed in said first seat. In accordance with this first embodiment, said first fitting comprises at least a second notch for the insertion of said retainer element. Specifically, when said first fitting is in said first inserted configuration, said at least a second notch coincides with said at least a first notch of said seat for the insertion of said retainer element. In other words, when said first fitting is in said first inserted configuration, said at least a second notch is at the same height and is facing on said at least a first notch of said first seat. Then, when associated to the main body, the retainer element simultaneously occupies said at least a second notch and said at least a first notch for keeping firmly housed said first fitting in said first seat through said association by interference of parts. In other words, when said retainer element is associated to the main body in correspondence of said first seat, a part thereof is housed in said first notch and another part is housed in said second notch so as to realize the above-mentioned interference of parts suitable for keeping said first fitting firmly housed in said first seat and preventing an uncoupling thereof from said main body.

According to another aspect, in accordance with the above-mentioned embodiment, said first fitting comprises a portion, preferably an ending portion, with polygonal section configured for facilitating the connection, preferably by means of screwing, to said pressurized heating device. In accordance to this aspect, at least part of said passage presents a polygonal section suitable for receiving a tool in insertion suitable for facilitating the association of the first fitting to the pressurized heating device. By way of example, in an embodiment, said first passage can comprise an ending portion with a hexagonal section to receive in insertion a hexagonal key, or Allen key, suitable for facilitating the screwing of the first fitting and its relative association to the pressurized heating device.

According to another aspect, representing a second embodiment of the safety group, said first fitting presents a longitudinal development lower than said depth of the first seat. In other words, when the first fitting is in its first inserted configuration, it is totally housed in said first seat occupying only part of the relative depth. Specifically, when it is in said first inserted configuration, the first fitting is completely housed in said first seat internally with respect to said first notch, i.e. the first fitting occupies a portion of the first seat not affected by the first notch. In accordance to this aspect, when the first fitting is in said first inserted configuration and said retainer element is inserted in said first notch, said first fitting abuts, i.e. abuts on, said retainer element for a firm housing of said first fitting in said first seat through said association by interference of parts. Alternatively said, in use, the first fitting is blocked between the walls defining the first seat and the retainer element, which, once inserted in the at least a first notch, prevents any movement of the first fitting.

According to another aspect in accordance with the above-mentioned second embodiment, said first passage comprises a portion, preferably an ending portion, with polygonal section configured for facilitating the connection, preferably by means of screwing, to said pressurized heating device. In accordance to this aspect, at least part of said passage presents a polygonal section suitable for receiving a tool in insertion suitable for facilitating the association of the first fitting to the pressurized heating device. By way of example, in an embodiment, said first passage can comprise an ending portion with a hexagonal section to receive in insertion a hexagonal key, or Allen key, suitable for facilitating the screwing of the first fitting and its relative association to the pressurized heating device.

According to another aspect, representing a third embodiment of the safety group, said first fitting presents a longitudinal development greater than said depth of the first seat. In other words, when the first fitting is in its first inserted configuration, only part of it is housed in said first seat while the remaining part emerges from said first seat and from said main body. In accordance with this third embodiment, said first fitting comprises at least a second notch for the insertion of said retainer element. Specifically, when said first fitting is in said first inserted configuration, said at least a second notch coincides with said at least a first notch of said first seat for the insertion of said retainer element. Alternatively said, when said first fitting is in said first inserted configuration, the at least a second notch is at the same height and is facing on said at least a first notch. Then, when associated to the main body, the retainer element simultaneously occupies said at least a second notch and said at least a first notch for keeping firmly housed said first fitting in said first seat through said association by interference of parts. In other words, when said retainer element is associated to the main body in correspondence of said first seat, a part of it is housed in said first notch and another part is housed in said second notch so as to realize the above-mentioned interference of parts suitable for keeping said first fitting firmly housed in said first seat and preventing an uncoupling thereof from said main body.

According to an aspect in accordance with the above-mentioned third embodiment, said first fitting comprises a portion, preferably an ending portion, suitable for not being contained in said first seat when the first fitting is in its first inserted configuration. In accordance to this aspect, said portion presents an external surface with polygonal section configured for facilitating the connection, preferably by means of screwing, of the first fitting to said pressurized heating device. By way of example, in an embodiment, said first fitting presents an ending portion with a hexagonal section suitable for being associated to a tool, such as for example a spanner, to facilitate the screwing of the first fitting and the relative association to the pressurized heating device. According to another aspect, the safety group comprises a second connection fitting. Specifically, the second fitting comprises a second passage for the passage of the fluid between said second opening and said water supply network. In other words, the second fitting acts as an interface between the second opening of the main body of the safety group and the water supply network. In accordance to this aspect, said second fitting is configured for being firmly connected, preferably by means of screwing, to said water supply network. It is noted that, according to the embodiment, the second fitting could be directly connected to the water supply network or to a joining conduit directly connected to the water supply network, without this resulting in structural and/or functional changes of the safety group object of the present document.

According to another aspect, the main body of the safety group comprises a second seat in correspondence of said second opening. Said second seat is configured for housing said second fitting. In accordance to this aspect, the main body comprises the above-mentioned second seat, upon which is facing on the second opening. When the second fitting is housed in said second seat, the second passage is in fluid communication with said second opening so as to allow a fluid flow between the main body and the water supply network. In particular, the second seat represents a depression, or cavity, in the external surface of said main body having a depth sufficient to contain at least partially said second fitting.

According to another aspect, said second fitting is selectively movable between a second extracted configuration, wherein is extracted from said second seat, and a second inserted configuration, wherein it is at least partially inserted and housed in said second seat.

According to another aspect, said second seat and said second fitting comprise both a thread for allowing an association by means of screwing. Specifically, the passage between said second extracted configuration and said second inserted configuration is carried out by means of screwing of the second fitting in said second seat. Preferably, the second passage comprises a portion with polygonal section suitable for receiving a tool in insertion suitable for facilitating the connection, preferably by means of screwing, of the second fitting to said water supply network.

According to yet another aspect, said second fitting comprises at least a second groove configured for housing at least a second sealing gasket. Preferably, said second fitting comprises a second groove configured for housing a second sealing gasket. Said at least a second sealing gasket is suitable for preventing a fluid leakage between the second fitting and the walls of the second seat when the second fitting is in said second inserted configuration.

According to another aspect, the above-mentioned safety valve comprises a manual actuation mechanism for allowing the opening of said safety valve, and the consequent fluid flow from said first opening to said third opening also when the pressure value at said first opening, i.e. in said pressurized heating device, is lower than said determined risk threshold. In accordance to this aspect, the safety valve is operable and openable even manually so as to allow the outflow of fluid from the tank of the pressurized heating device even when the pressure in said tank is lower than the risk threshold. This functionality is particularly useful in cases where it is necessary to empty the tank of the pressurized heating device in order to carry out, for example, maintenance operations.

According to another aspect, said shut-off valve comprises a manual command device for commanding the opening and/or the closing of said shut-off valve. In accordance to this aspect, the manual command device is operable for allowing or interrupting a fluid flow from the water supply network to the pressurized heating device. It is noted that the flow in the opposite direction, i.e. from the pressurized heating device to the water supply network, is prevented by the presence of the nonreturn valve.

According to yet another aspect, said safety group comprises furthermore a check device of the correct functioning of the shut-off valve and of the nonreturn valve. Preferably, said check device is active on the inner cavity of the main body in the portion interposed between the shut-off valve and the nonreturn valve. In accordance to this aspect, the check device is operable to check the correct functioning of the shut-off valve and/or of the nonreturn valve. By way of example, by closing the shut-off valve with said manual command device, it is possible to operate the check device to assess the correct functioning of the shut-off valve, which, being closed, should not allow the passage of the fluid from the water supply network to the pressurized heating device, and/or of the nonreturn valve, which by definition should not allow the return of fluid from the pressurized heating device to the water supply network.

According to yet another aspect, the safety group comprises a directional exhaust. Said directional exhaust is associated to said third opening and is configured for directing the flow exiting from said third opening when the safety valve is in an opening condition. In other words, by manipulating the directional exhaust it is possible to direct the fluid flow exiting from said pressurized heating device when the safety valve is opened, for example following an increase in pressure in the tank beyond the risk threshold.

According to another aspect, said risk threshold is between 500 kPa and 1000 kPa. Preferably, said risk threshold is between 600 kPa and 900 kPa. Even more preferably, said risk threshold is equal to 700 kPa.

According to another aspect, said first seat presents two first notches for an insertion of said retainer element. According to another aspect, said retainer element presents a substantially "U" shape having two ending portions suitable for being inserted in said two first notches for an association to said main body and for keeping firmly housed said first fitting in said first seat through an association by interference of parts when said first fitting is in said first inserted configuration.

According to a second aspect, the present invention also has as its object a method of installation of the safety group for a pressurized heating device in accordance with one or more of the previously introduced aspects. According to an aspect, said method of installation comprises the following steps:
- arranging a safety group in accordance with one or more of the previously introduced aspects;
- associating said safety group to the water supply network in correspondence of said second opening of the main body;
- associating, preferably by means of screwing, said first fitting to said pressurized heating device;
- inserting said first fitting in said first seat in correspondence of the first opening of the main body;
- constraining said first fitting and said main body by interference of parts, by inserting said retainer element.

It is noted that the steps of said method of installation may also be carried out in an order different from that in which they were shown. For example, the step of associating said safety group to the water supply network can be carried out before the step of inserting said first fitting in said first seat.

It should be noted, furthermore, that in the execution of said method of installation it is not provided any screwing of the main body to the pressurized heating device, but only an insertion of the first fitting, which is individually associated preferably by means of screwing to the pressurized heating device. In this way, the installation difficulties of known safety groups are eliminated wherein it was necessary a screwing of the voluminous body of the entire safety group into the narrow spaces wherein pressurized heating devices are typically installed.

According to another aspect, the method of installation provides that said step of associating said safety group to the water supply network comprises the following steps:
- associating, by means of screwing, said second fitting to said water supply network;
- inserting, preferably by means of screwing, said second fitting in said second seat in correspondence of the second opening of the main body.

According to another aspect, said step of inserting said second fitting in said second seat provides for screwing said second fitting in said second seat.

In accordance with another aspect, the method of installation provides a step of verification of the correct installation of the safety group. Specifically, said step of verification provides a closing of said shut-off valve through said command device and an actuation of said check device of the correct functioning of the safety group as previously described.

According to a third aspect, the present invention also has as its object a method of replacement of the main body of a safety group installed according to the method of installation in accordance with one or more of the previously described aspects.

According to another aspect, said method of replacement of the main body of a safety group comprises the following steps:
- arranging a new main body of the safety group in accordance with one or more of the previously introduced aspects;
- removing the retainer element from the first seat of the main body of the safety group previously installed;
- extracting the first fitting from the first seat of the main body of the safety group previously installed keeping said first fitting associated to said pressurized heating device;
- disassociating the main body of the safety group previously installed from the water supply network;
- associating said new main body to the water supply network in correspondence of said second opening;
- inserting said first fitting in the first seat of the new main body;
- constraining said first fitting and said new main body by interference of parts, by inserting said retainer element. It is noted that the steps of the above-mentioned method of installation may also be carried out in an order different from that in which they were shown. For example, the step of associating said new main body to the water supply network can be carried out before the step of inserting said first fitting in the first seat of the new main body.

It is noted that the step of arranging a new main body of the safety group involves the arrangement of a main body having the technical characteristics of the previously described main body. In fact, in this step, is arranged only a main body analogous to the main body of the safety group previously installed in accordance with said method of installation. Substantially, it is arranged only the main body of the safety group without said first fitting, said retainer element and said second fitting.

Analogously to the method of installation, also the method of replacement involves considerable advantages with respect to known solutions since are eliminated complicated screwing maneuvers necessary for disassociating the entire body of the safety group previously installed and for associating the new safety group. According to another aspect, the above-mentioned step of disassociating the main body of the safety group previously installed from the water supply network provides for extracting the second fitting from the second seat of the main body of the safety group previously installed, keeping said second fitting associated to said water supply network.

According to yet another aspect, said step of associating said new main body to the water supply network provides for inserting the second fitting in the second seat of the new main body.

According to yet another aspect, the step of arranging a new main body provides that the new main body is already arranged with a new second fitting inserted in the second seat. According to this aspect, the above-mentioned step of disassociating the main body of the safety group previously installed from the water supply network provides for keeping the second fitting in the second inserted configuration within the second seat of the main body of the safety group previously installed. Still in accordance to this aspect, said step of associating said new main body to the water supply network provides for associating the second fitting of the new main body to the water supply network. Therefore, according to this aspect, the method of replacement provides that it is also replaced the second fitting of the safety group previously installed with a new second fitting, preventively associated to the new main body.

According to a fourth aspect, the present invention has as its object a heating system of a fluid comprising:
- a water supply network for the supply of water to be heated;
- a pressurized heating device, preferably a pressurized electric heating device configured for heating the water received from said water supply network;
- a safety group according to one or more of the previously shown aspects, interposed between said water supply network, said pressurized heating device and an external environment.

Each of the above-mentioned aspects of the invention can be taken alone or in combination with any of the claims or other aspects described.

Further features and advantages will become more apparent from the detailed description of some exemplary but not exclusive embodiments of a safety group for a pressurized heating device and of relative methods of installation and replacement in accordance with the present invention.

This description will be shown below with reference to the attached figures, provided for illustrative purposes only and, therefore, not limiting, in which:
- figure 1 shows, through a perspective view, a safety group for a pressurized heating device of known type;
- figure 2 shows, through a sectional view, the safety group of known type referred to in figure 1;
- figure 3 shows a detail of the safety group of known type referred to in figure 2;
- figure 4 shows, through a perspective view, a first embodiment of the safety group for a pressurized heating device in accordance with the present invention;
- figure 5 shows, through a sectional view, the safety group according to the first embodiment referred to in figure 4;
- figure 6 shows an implementation detail of the safety group according to the embodiment referred to in figure 5;
- figure 7 shows an exploded view of the safety group according to the first embodiment referred to in figure 4;
- figure 8 shows, through a perspective view, a second embodiment of the safety group for a pressurized heating device in accordance with the present invention;
- figure 9 shows, through a sectional view, the safety group according to the second embodiment referred to in figure 8;
- figure 10 shows an implementation detail of the safety group according to the embodiment referred to in figure 9;
- figure 11 shows, through a perspective view, a third embodiment of the safety group for a pressurized heating device in accordance with the present invention;
- figure 12 shows, through a sectional view, the safety group according to the third embodiment referred to in figure 11;
- figure 13 shows an implementation detail of the safety group according to the third embodiment referred to in figure 12;
- figure 14 shows, through a schematic block diagram, a method of installation of the safety group in accordance with the present invention;
- figure 15 shows, through a schematic block diagram, a method of replacement of the main body of the safety group object of the present invention too;
- figure 16 shows, through a simplified block diagram, a water heating system object of the present invention too.

With reference to the attached figures, with reference 1 it has been overall indicated a safety group for a pressurized heating device B in accordance with the present invention, hereafter simply referred to as safety group 1 or only group 1. In general, the same reference number is used for equal or similar elements, possibly in their embodiment variants.

In the present description, with the expression "pressurized heating device B" or simply "heating device B" is intended a device configured for heating a fluid, typically sanitary water coming from a water supply network A, and for storing that heated fluid in an appropriate pressurized tank until a user, installed in the room served by said heating device B, requires a determined amount of it to deliver a service. In the context of sanitary water, typical examples of users using heated sanitary water are represented by faucets, preferably provided with mixers for the adjustment of the temperature of the water supplied through a mixing of the hot water coming from the heating device B and the cold water supplied by said water supply network A.

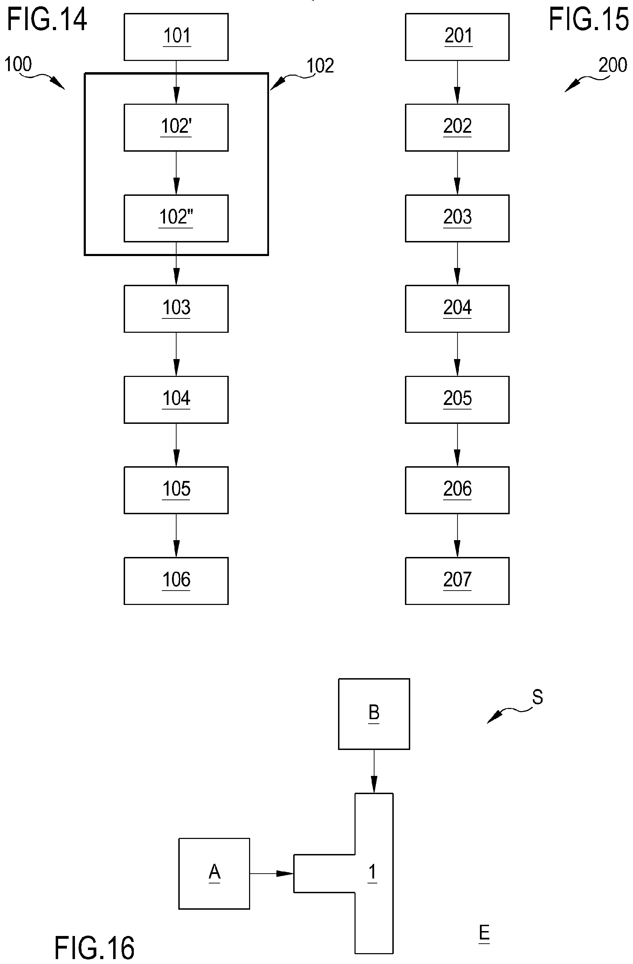

The safety group 1 finds particular application in the context of heating devices B of electrical type, such as electric boilers, i.e. electrically powered pressurized heating devices, which typically use electrical resistances to transfer heat to the fluid to be stored in the tank for a future use. Specifically, the safety group 1 is typically used inside a fluid heating system S as the one shown in figure 16. As shown, the system S comprises:
- a water supply network A for the supply of water to be heated;
- a pressurized heating device B, preferably a pressurized electric heating device configured for heating water received from said water supply network A;
- a safety group 1 according to what will be set forth in the following of the present description, interposed between said water supply network A, said pressurized heating device B and an external environment E.

Specifically, the safety group 1 represents a safety device suitable for being combined to said pressurized heating device B in order to prevent the occurrence of an excessive pressure inside the relative storage tank. If the pressure value inside said reservoir exceeds a corresponding risk value, the safety group 1 is activated in order to lower this pressure value and to prevent malfunctions and/or explosions of the heating device B to which it is combined.

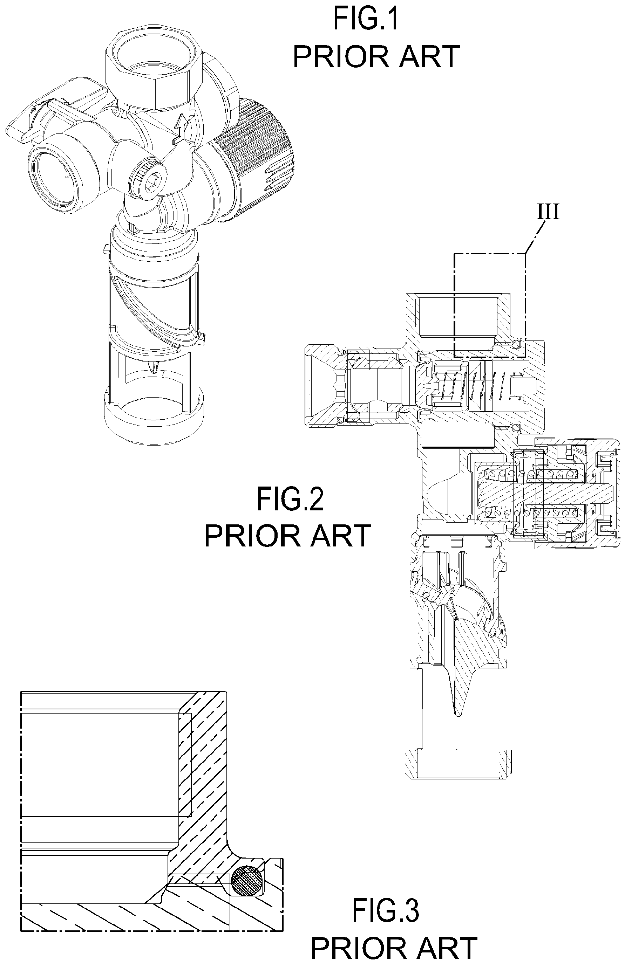

In figures 1-3 it is shown a safety group of known type, which is substantially composed by a single main metal body inside within which are housed additional valve components configured for allowing the correct functioning of the safety group itself. Typically, the main body of a safety group of known type is made of brass.

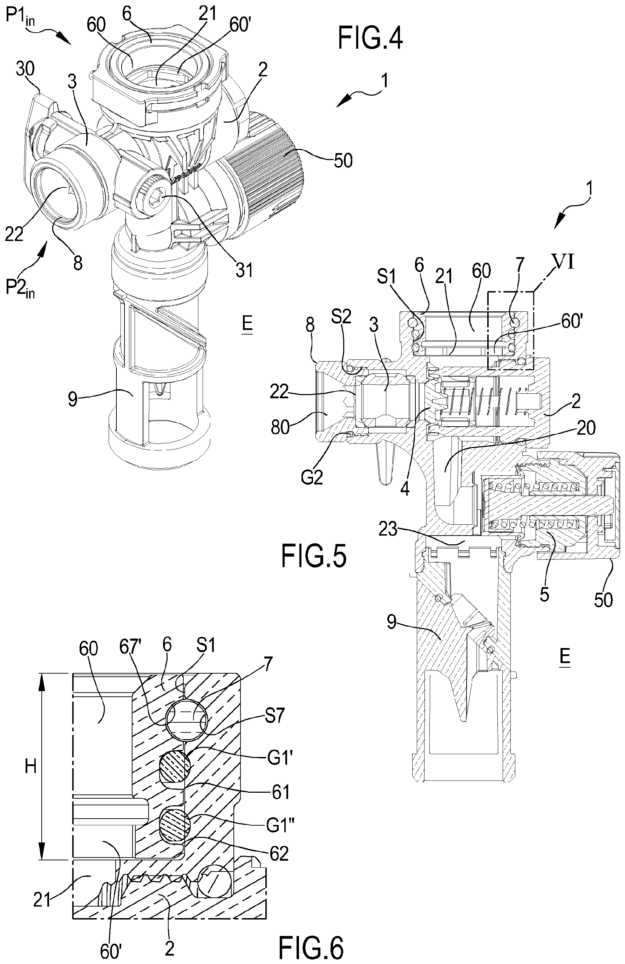

In figures 4-13 are shown some embodiments of the safety group 1 in accordance with the present description. As it will become clearer in the following, the safety group 1 presents considerable differences with respect to the known safety groups and ensures considerable advantages both in terms of manufacturing cost-effectiveness and in terms of convenience of installation and/or use. Specifically, figures 4-13 show three among the possible embodiments of the safety group 1, which differ among them in some implementation details.

As shown in figures 4-13, the safety group 1 comprises a main body 2 internally hollow. Specifically, the main body 2 comprises an internal cavity 20 for fluid flow within the main body 2. As evident from the graphical representations, the main body 2 preferably represents the main portion of the safety group 1, wherein are housed the other components forming part of said safety group and which are configured to direct the fluid flow within the internal cavity 20.

As better shown in sections of figures 5, 9 and 12, in said main body 2 are obtained the following openings:
- a first opening 21 suitable for being placed in fluid communication with said heating device B;
- a second opening 22 suitable for being placed in fluid communication with the water supply network A of the fluid to be heated through said heating device B;
- a third opening 23 suitable for being placed in fluid communication with an environment E, preferably at atmospheric pressure, wherein it is installed said heating device B.

In the context of the main body 2, the above-mentioned first opening 21, second opening 22 and third opening 23 are in fluid communication with each other, i.e. the internal cavity of the main body 20 is configured as an articulated channel that develops between the above-mentioned first opening 21, second opening 22 and third opening 23. As it will become clearer in the following, the fluid communication between the above-mentioned openings is selectively interrupted by further components housed in the main body 2.

According to a first embodiment, said main body 2 is made of plastic material.

In accordance with alternative embodiments, the main body 2 is made of metal material, for example brass or steel.

As better shown in sections of figures 5, 9 and 12, the safety group 1 comprises a shut-off valve 3 interposed between said first opening 21 and said second opening 22. Specifically, said shut-off valve 3 is openable and closable on command for interrupting the fluid communication between said first opening 21 and said second opening 22. Consequently, the shut-off valve 3 is configured for selectively interrupting the fluid communication between said water supply network A and said heating device B.

Furthermore, the safety group 1 comprises a nonreturn valve 4, interposed too between said first opening 21 and said second opening 22. Specifically, said nonreturn valve 4 is configured for allowing a fluid flow entering said heating device B from said second opening 22 to said first opening 21 and for preventing a fluid flow exiting from said heating device B from said first opening 21 to said second opening 22. In other words, the nonreturn valve 4 is configured for allowing, through said main body 2, the fluid flow exiting from said water supply network A to said heating device B and for preventing the fluid flow in the opposite direction, i.e. from said heating device B to said water supply network A.

In the shown embodiments, the nonreturn valve 4 is preferably placed downstream of the shut-off valve 3 considering as reference the fluid flow from said water supply network A to said heating device B, i.e. from said second opening 22 to said first opening 21. In other terms, the nonreturn valve 4 is closer to the first opening 21 with respect to the shut-off valve 3, which, on the other hand, is closer to the second opening 22.

In addition, the safety group 1 comprises a safety valve 5 interposed between said first opening 21 and said third opening 23. Said safety valve 5 is configured for allowing or for selectively interrupting a fluid flow between the above-mentioned first opening 21 and third opening 23. In particular, said safety valve 5 is configured for remaining closed when a pressure value at the first opening 21 is lower than a determined risk threshold and for being open when said pressure value at the first opening 21 is higher or equal than said determined risk threshold. It is noted that, by construction, the fluid pressure at the first opening 21 corresponds to the pressure that occurs in said heating device B. Consequently, the safety valve 5 is configured for interrupting a fluid flow from the first opening 21 to the third opening 23, i.e. from the heating device B to the external environment E, when the pressure value at the first opening 21, and then in the tank of said heating device B, is lower than said risk threshold. At the same time, the safety valve 5 is configured for allowing a fluid flow from the first opening 21 to the third opening 23, i.e. from the heating device B to the external environment, when the pressure value at the first opening 21, and then in the tank of said heating device, is higher or equal to the above-mentioned risk threshold.

It is noted that the above-mentioned shut-off valve 3, nonreturn valve 4 and safety valve 5 are, in fact, analogous to the valves present in the safety group shown in figures 1-3. These valves are known in the technical field of the safety group 1 and, therefore, are not described in detail in the present document.

In principle, under normal operating conditions, i.e. when the fluid pressure in the tank of said heating device B is lower than the risk threshold, the safety group 1 is configured for allowing a fluid flow only from the second opening 22 to the first opening 21, i.e. a fluid flow entering said heating device B from said water supply network A. When, instead, the pressure in said tank reaches or exceeds the risk threshold, the safety valve 5 opens and the safety group 1 promotes the outflow of fluid from said heating device B from said first opening 21 and disperses said fluid into the environment E through the third opening 23, at the same time decreasing the pressure in the tank until it reaches a value lower than the risk threshold.

Typically, under normal operating conditions, the pressure in the tank of the heating device B is between 300 kPa (3 bar) and 500 kPa (5 bar). In an embodiment, said risk threshold is between 500 kPa (6 bar) and 1000 kPa (10 bar). Preferably, said risk threshold is between 600 kPa (7 bar) and 900 kPa (9 bar). Even more preferably, said risk threshold is equal to 700 kPa (7 bar).

As shown in figures 4-13, the safety group 1 comprises a first connection fitting 6. Said first fitting 6 comprises a first passage 60 for the passage of the fluid between said first opening 21 and said heating device B. In other words, the first fitting 6 acts as an interface between the first opening 21 of the main body 2 and the heating device B.

In particular, the first fitting 6 is configured for being connected, preferably by means of screwing, to said heating device B. It is noted that, according to the embodiment, the first fitting 6 could be directly connected to the relative heating device B or to a supply duct to said heating device B, without this resulting in structural and/or functional changes of the safety group 1.

In accordance with an embodiment, the first fitting 6 is made of metal material, preferably brass. More preferably, the first fitting 6 is made of lead-free brass.

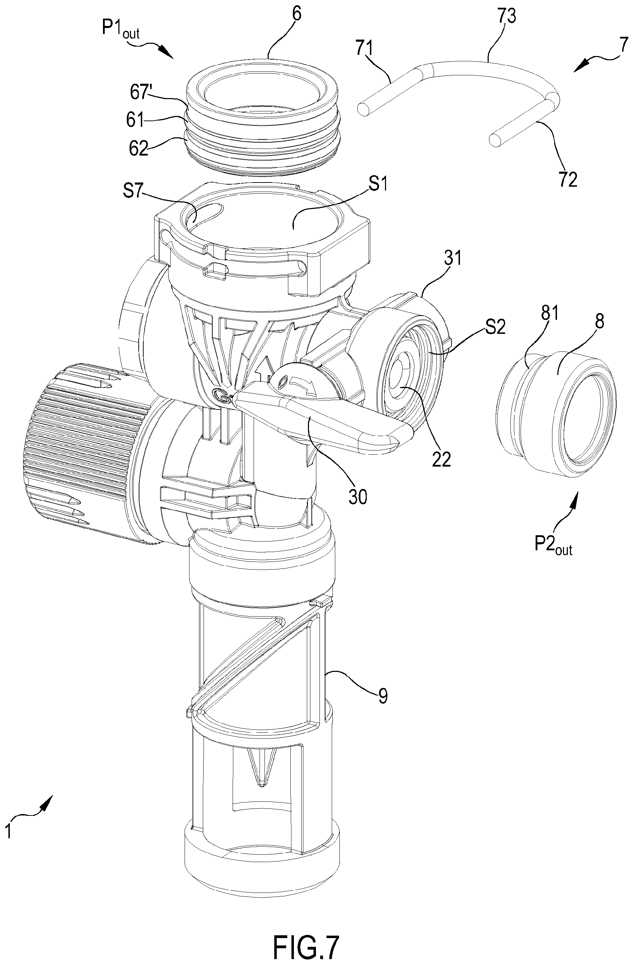

As better shown in figure 7, the main body 2 of the safety group 1 comprises a first seat S1 in correspondence of said first opening 21. Said first seat S1 is configured for removably housing said first fitting 6. Specifically, the first opening 21 is facing on the above-mentioned first seat S1. When the first fitting 6 is housed in said first seat S1, the first passage 60 results in fluid communication with said first opening 21 so as to allow a fluid flow between the inner cavity 20 of the main body 2 and the heating device B.

As shown in particular in figure 7, said first fitting 6 comprises at least a first groove 61, 62 configured for housing at least a first sealing gasket G1', G1". In the shown embodiment, said first fitting 6 comprises two first grooves 61, 62 configured for housing two sealing gaskets G1', G1". Said at least a first gasket G1', G1" is suitable for preventing a fluid leakage between the first fitting 6 and the walls of the first seat S1 when the first fitting is housed in the above-mentioned first seat S1.

According to what is shown in figures 4-13, the safety group 1 comprises a retainer element 7. This retainer element 7 is configured for being selectively associated to said main body 2 in correspondence of said first seat S1. In particular, when the first fitting 6 is housed in said first seat S1, the retainer element 7 is associated to said main body 2 in correspondence of the first seat itself for keeping firmly housed said first fitting 6 and preventing an uncoupling between said first fitting 6 and said main body 2.

In a first embodiment, said retainer element 7 is made of metal material, preferably steel.

The first fitting 6 is selectively movable between a first extracted configuration P1out, shown in figure 7 and wherein it is extracted from said first seat, and a first inserted configuration P1in, shown in figures 4-6 and 8-13 and wherein it is at least partially inserted and housed in said first seat S1.

As shown in the details of figures 6, 10 and 13, the retainer element 7 is configured for keeping firmly housed said first fitting 6 in said first seat S1 through an association by interference of parts when said first fitting 6 is in said first inserted configuration P1in.

In order to allow an insertion of said retainer element 7, said first seat S1 presents at least a first notch S7. Specifically, when said first fitting 6 is in the first inserted configuration P1in and said retainer element 7 is inserted in said at least a first notch S7, said first fitting 6 and said main body 2 are associated between them by interference of parts. In the shown embodiment, the first seat S1 presents two notches that influence at least partially the inner walls of the first seat S1.

It is noted that the insertion of the retainer element 7 within the at least a first notch S7 is in charge of preventing the passage of the first fitting 6 from the first inserted configuration P1in to the first extracted configuration P1out, but still allows relative rotations between the main body 2 and the first fitting 6 inserted in the relative first seat S1. In other words, the association by interference of parts between the first fitting 6 and the main body 2 only prevents axial movements of the first fitting 6 within the first seat S1, but allows the first fitting 6 itself to rotate relative to the main body 2 within the corresponding first seat S1. Advantageously, the possibility of rotating relative to the main body 2 and the first fitting 6, even when the latter is kept in the first inserted configuration P1in by the retainer element 7, allows to adjust the position of the safety group 1 so as to better adapt to the orientation of the water supply network pipe A to which it is connected.

As shown in the exploded view of figure 7, said retainer element 7 presents a substantially "U" shape having two ending portions 71, 72 suitable for being inserted in said two first notches S7 for keeping firmly housed said first fitting 6 in said first seat S1 through an association by interference of parts when said first fitting 6 is in said first inserted configuration P1in. Furthermore, the retainer element 7 comprises a joining portion 73 suitable for joining the two ending portions 71, 72 so as to form a unique body.

As shown in the attached figures, said first seat S1 develops inside said main body 2 for a depth H suitable for housing at least partially said first fitting 6. In particular, the first seat S1 represents a depression, or cavity, in the external surface of said main body 2 and presents a depth H sufficient to contain at least partially said first fitting 6 when it is in the first inserted configuration P1in. After the insertion of the retainer element 7, the first fitting 6 is firmly kept within the first seat S1 by interference of parts.

According to the shown embodiments, said first seat S1 has a cylindrical section and, consequently, said first fitting 6 presents, on at least part of its development, a cylindrical conformation suitable for allowing its housing in said first seat S1.

The structural differences of the three embodiments of the safety group 1 shown in figures 3-13 are now described in detail.

A first embodiment of the safety group 1 is shown according to different views in figures 3-7. In this first embodiment, said first fitting 6 presents a longitudinal development substantially equal to said depth H of the first seat S1. In other words, when the first fitting 6 is housed in said first seat S1, it occupies the entire development in depth of the first seat S1. Alternatively, when it is in said first inserted configuration P1 in, the first fitting 6 is completely housed in said first seat S1 and occupies the whole depth H of the first seat itself. In accordance with this first embodiment, said first fitting 6 comprises at least a second notch 67' for the insertion of said retainer element 7. In the shown embodiment, the first fitting 6 comprises a unique second notch 67' that develops circularly on the external surface of said first fitting 6. Specifically, when said first fitting 6 is in said first inserted configuration P1 in, said at least a second notch 67' coincides with said at least a first notch S7 for the insertion of said retainer element 7, i.e. the two notches settle at the same height. As shown in figure 6, the retainer element 7 then simultaneously occupies said at least a second notch 67' and said at least a first notch S7 for keeping firmly housed said first fitting 6 in said first seat S1 through said association by interference of parts. In other words, when said retainer element 7 is associated to said main body 2 in correspondence of said first seat S1, a part of it occupies said first notch S7 and another part occupies said second notch 67' so as to realize the above-mentioned interference of parts suitable for keeping said first fitting 6 firmly housed in said first seat S1.

According to the above-mentioned first embodiment, said first passage 60 comprises a portion 60', preferably an ending portion, with polygonal section configured for facilitating the connection, preferably by means of screwing, to said heating device B. In accordance to this aspect, at least part of said passage 60 presents a polygonal section suitable for receiving a tool in insertion suitable for facilitating the association of the first fitting 6 to the heating device B. In the shown embodiment, said first passage 60 comprises an ending portion 60' with a hexagonal section to receive in insertion a hexagonal key, or Allen key, suitable for facilitating the screwing of the first fitting 6 and its relative association to the heating device B.

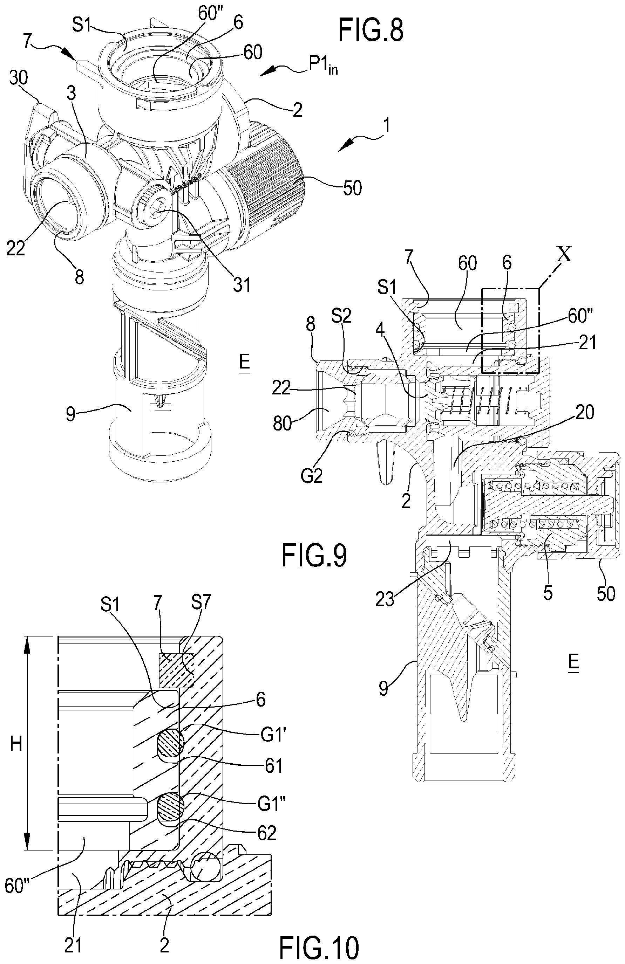

A second embodiment of the safety group 1 is shown according to different views in figures 8-10. In this second embodiment, said first fitting 6 presents a longitudinal development lower than said depth H of the first seat S1. In other words, when the first fitting 6 is in its first inserted configuration P1in, it is totally housed in said first seat S1 occupying only part of the relative depth H. Specifically, when it is in said first inserted configuration P1in, the first fitting is completely housed in said first seat S1 internally with respect to said first notch S7, i.e. the first fitting 6 occupies a portion of the first seat S1 not affected by the first notch S7. As shown in figure 10, when the first fitting 6 is in said first inserted configuration P1in and said retainer element 7 is inserted in said at least a first notch S7, said first fitting 6 abuts, i.e. abuts on, said retainer element 7 for a firm housing of said first fitting 6 in said first seat S1 through said association by interference of parts. Alternatively said, in use, the first fitting 6 is blocked between the walls defining the first seat S1 and the retainer element 7, which, once inserted in the at least a first notch S7, prevents any axial movement of the first fitting 6.

In substantially the same way as the first embodiment previously described, also in the second embodiment, said first passage 60 comprises a portion 60", preferably an ending portion, with polygonal section configured for facilitating the connection, preferably by means of screwing, to said heating device B. Specifically, at least part of said passage 60 presents a polygonal section 60" suitable for receiving a tool in insertion suitable for facilitating the association of the first fitting 6 to the heating device B. In the shown embodiment in figures 8-10, said first passage 60 comprises an ending portion 60" with a hexagonal section to receive in insertion a hexagonal key, or Allen key, suitable for facilitating the screwing of the first fitting 6 and its relative association to the heating device B.

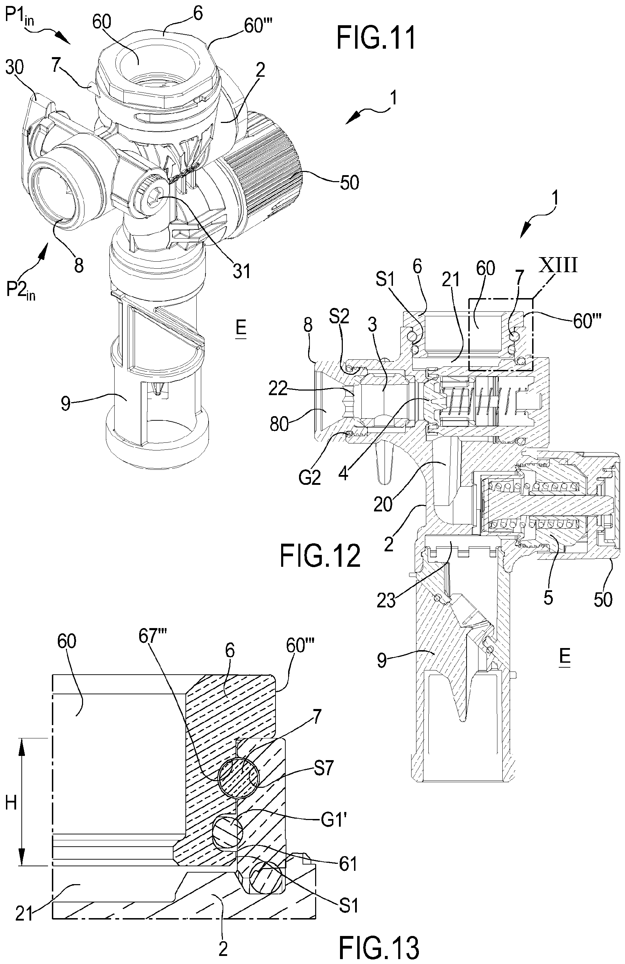

A third embodiment of the safety group 1 is shown according to different views in figures 11-13. In accordance with said third embodiment, said first fitting 6 presents a longitudinal development greater than said depth H of the first seat S1. In other words, when the first fitting 6 is in its first inserted configuration P1in, only part of it is housed in said first seat S1 while the remaining part emerges from said first seat S1 and from said main body 2. In accordance with this third embodiment, said first fitting 6 comprises at least a second notch 67‴ for the insertion of said retainer element 7. As shown in the detail of figure 13, when said first fitting 6 is in said first inserted configuration P1in, said at least a second notch 67‴ coincides with said at least a first notch S7 for the insertion of said retainer element 7, i.e. the two notches settle at the same height. This retainer element 7 occupies, then, simultaneously said at least a second notch 67‴ and said at least a first notch S7 for keeping firmly housed said first fitting 6 in said first seat S1 through said association by interference of parts. In other words, when said retainer element 7 is associated to said first seat S1, a part of it occupies said first notch S7 and another part occupies said second notch 67‴ so as to realize the above-mentioned interference of parts suitable for keeping said first fitting 6 firmly housed in said first seat S1.

According to the above-mentioned third embodiment, said first fitting 6 comprises a portion 60'", preferably an ending portion, suitable for not being contained in said first seat S1 when the first fitting 6 is in its first inserted configuration P1in. As shown in figures 11-13, said portion 60‴ presents an external surface with polygonal section configured for facilitating the connection, preferably by means of screwing, of the first fitting 6 to said heating device B. In the shown embodiment, said ending portion 60‴ presents a hexagonal section suitable for being associated to a tool, such as for example a spanner, to facilitate the screwing of the first fitting 6 and the relative association to the pressurized heating device B.

In the shown embodiments, the safety group 1 comprises also a second connection fitting 8. Specifically, the second fitting 8 comprises a second passage 80 for the passage of the fluid between said second opening 22 and said water supply network A. In accordance to this aspect, said second fitting 8 is configured for being firmly connected, preferably by means of screwing, to said water supply network A. It is noted that, according to the embodiment, the second fitting 8 could be directly connected to the water supply network A or to a joining conduit to the water supply network A, without this resulting in structural and/or functional changes of the safety group 1 object of the present document.

In order to house said second fitting 8, the main body 2 comprises a second seat S2 in correspondence of said second opening 22. Therefore, said second seat S2 is configured for housing said second fitting 8. The above-mentioned second opening 22 is, then, facing on said second seat S2. When the second fitting 8 is housed in said second seat S2, the second passage 80 is in fluid communication with said second opening 22 so as to allow a fluid flow between the main body 2 and the water supply network A. In particular, the second seat S2 represents a depression, or cavity, in the external surface of said main body 2 having a depth sufficient, and a conformation adapted to, house at least partially said second fitting 8.

The second fitting 8 is selectively movable between a second extracted configuration P2out, shown in figure 7 and wherein the second fitting 8 is extracted from said second seat S2, and a second inserted configuration P2in, shown in figures 3-6 and 8-13 and wherein the second fitting 8 is at least partially inserted and housed in said second seat S2.

In the shown embodiment, said second seat S2 and said second fitting 8 comprise both a thread for allowing an association by means of screwing. Specifically, the passage between said second extracted configuration P2out and said second inserted configuration P2in is carried out by means of screwing. Preferably, the second passage 80 comprises a portion with polygonal section suitable for receiving a tool in insertion suitable for facilitating the screwing of the second fitting 8 in said second seat S2.

As shown in figure 7, said second fitting 8 comprises at least a second groove 81 configured for housing at least a second sealing gasket G2. In the shown embodiment, said second fitting 8 comprises a second groove 81 configured for housing a second sealing gasket G2. Said at least a second sealing gasket G2 is suitable for preventing a fluid leakage between the second fitting 8 and the walls of the second seat S2 when the second fitting 8 is housed in the above-mentioned second seat S2.

Preferably, as appreciable in the shown embodiments, the above-mentioned safety valve 5 comprises a manual actuation mechanism 50 for allowing the opening of said safety valve 5, and the consequent fluid flow from said first opening 21 to said third opening 23 also when the pressure value in correspondence of said first opening 21, i.e. in said heating device B, is lower than said determined risk threshold. Specifically, through said manual actuation mechanism 50, the safety valve 5 is operable and openable even manually so as to allow the outflow of fluid from the tank of the heating device B even when the pressure in the relative tank is lower than the risk threshold. This functionality is particularly useful in cases where it is necessary to empty the tank of the heating device B to carry out, for example, maintenance operations.

In the shown embodiments it is possible to notice that said shut-off valve 3 comprises a manual command device 30 for commanding the opening and/or the closing of said shut-off valve 3. In particular, the manual command device 30 is operable for allowing or interrupting a fluid flow from the water supply network A to the heating device B. It is noted that the flow in the opposite direction, i.e. from the heating device B to the water supply network, is prevented by the presence of the nonreturn valve 4.

In the above-mentioned embodiments, said shut-off valve 3 comprises furthermore a check device 31 of the correct functioning of the safety group 1. Specifically, said check device 31 is active on the inner cavity 20 of the main body 2 in the portion interposed between the shut-off valve 3 and the nonreturn valve 4. In use, the check device 31 is operable to check the correct functioning of the shut-off valve 3 and/or of the nonreturn valve 4. By way of example, closing the shut-off valve 3 with said manual command device 30, it is possible to operate the check device 31 to assess the correct functioning of the shut-off valve 3, which, being closed, should not allow the passage of the fluid from the water supply network A to the heating device B, and/or of the nonreturn valve 4, which by definition should not allow the return of fluid from the heating device B to the water supply network A. In the shown embodiment, the check device 31 is represented by a set screw, configured for being unscrewed in order to connect the inner cavity 20 with the external environment E. In case of correct functioning of the shut-off valve 3 and of the nonreturn valve 4, if the manual command device 30 is operated for closing said shut-off valve 3, no continuous flow of fluid should be noticed once removed a set screw of the check device 31. If, on the contrary, a continuous flow of fluid is appreciable, this situation would be symptomatic of a non-correct functioning of the shut-off valve 3 and/or of the nonreturn valve 4.

As shown in figures 4-13, the safety group 1 comprises a directional exhaust 9. Said directional exhaust 9 is associated to said main body 2 in correspondence of said third opening 23. Specifically, the directional exhaust 9 is configured for directing the flow exiting from said third opening 23 when the safety valve 5 is in an opening condition. In other words, by manipulating the directional exhaust 9 it is possible to direct the fluid flow exiting from said heating device B, through the third opening 23 of the safety group 1, when the safety valve 5 is opened, for example following an increase in pressure in the tank beyond the risk threshold.

The present description has also as object a method of installation 100 of the safety group 1 for a heating device B in accordance with the above.

In figure 14 are schematically shown the following salient steps of an embodiment of the method of installation 100:
- arranging 101 a safety group 1 in accordance with what was previously described;
- associating 105 said safety group 1 to the water supply network A in correspondence of said second opening 22 of the main body 2;
- associating 103, preferably by means of screwing, said first fitting 6 to said heating device B;
- inserting 104 said first fitting 6 in said first seat S1 in correspondence of the first opening 21 of the main body 2;
- constraining 105 said first fitting 6 and said main body 2 by interference of parts through the insertion of said retainer element 7 in said first seat S1.

Preferably, the method of installation 100 provides that said step of associating 102 said safety group to the water supply network comprises the following steps:
- associating 102', preferably by means of screwing, said second fitting 8 to said water supply network;
- inserting 102" said second fitting 8 in said second seat S2 in correspondence of the second opening 22 of the main body 2.

Still preferably, said step of inserting 102" said second fitting 8 in said second seat S2 provides for screwing said second fitting 8 in said second seat S2.

In an embodiment, the method of installation 100 provides for a step of verification 106 of the correct installation of the safety group 1. Specifically, said step of verification 106 provides for a closing of said shut-off valve 3 through said command device 30 and an actuation of said check device 31 of the correct functioning of the safety group 1 as previously described.

The present description has also as object a method of replacement 200 of the main body 2 of a safety group 1 installed according to the method of installation 100 previously shown.

With reference to the embodiment of figure 15, said method of replacement 200 of the main body 2 comprises the following steps:
- arranging 201 a new main body 2 of the safety group 1 in accordance with what was previously described;
- removing 202 the retainer element 7 from the first seat S1 of the main body 2 of the safety group 1 previously installed according to the method of installation 100;
- extracting 203 the first fitting 6 from the first seat S1 of the main body 2 of the safety group 1 previously installed, keeping said first fitting 6 associated to said heating device B;
- disassociating 204 the main body 2 of the safety group 1 previously installed from the water supply network A;
- associating 205 said new main body 2 to the water supply network A in correspondence of said second opening 22;
- inserting 206 said first fitting 6 in the first seat S1 of the new main body 2;
- constraining 207 said first fitting 6 and said new main body 2 by interference of parts, by inserting said retainer element 7.

It is noted that the step of arranging 201 a new main body 2 of the safety group 1 involves the arrangement of a main body 2 having the technical characteristics of the previously described main body 2. In fact, in this step, it is arranged only a main body 2 analogous to the main body of the safety group 1 previously installed in accordance with the method of installation 100. Substantially, it is arranged only the main body 2 of the safety group without said first fitting 6, said retainer element 7 and said second fitting 8. Substantially, the new main body 2 is a replacement part, technically equivalent, to the main body 2 to be replaced.

According to an embodiment, the above-mentioned step of disassociating 204 the main body 2 of the safety group 1 previously installed from the water supply network A provides for extracting the second fitting 8 from the second seat S2 of the main body 2 of the safety group 1 previously installed, keeping said second fitting 8 associated to said water supply network A. In accordance with this embodiment, said step of associating 205 said new main body 2 to the water supply network A provides for inserting the second fitting 8 in the second seat S2 of the new main body 2.

In another embodiment, the step of arranging 201 a new main body 2 provides that the new main body 2 is already arranged with a new second fitting 8 inserted in the second seat S2. In this embodiment, the above-mentioned step of disassociating 204 the main body 2 of the safety group 1 previously installed from the water supply network A provides for keeping the second fitting 8 in the second inserted configuration P2in within the second seat S2 of the main body 2 of the safety group 1 previously installed. In accordance with this embodiment, said step of associating 205 said new main body 2 to the water supply network A provides for associating the second fitting 8 of the new main body 2 to the water supply network A. In accordance with this embodiment, is also replaced the second fitting 8 of the safety group 1 previously installed.

The invention thus conceived is susceptible to numerous changes and variants, all of which within the scope of the inventive concept, and the aforementioned components are replaceable by other technically equivalent elements.

The invention achieves important advantages with respect to the safety groups being part of the state of the art that, as previously described, are substantially composed by a single metal body within which are housed more valve components. The footprint of this body makes particularly complicated the installation operations due to the narrow spaces where are typically housed the pressurized heating devices. Furthermore, when the aforementioned known safety groups must be replaced, due to malfunctions/failures or due to reasons linked to safety rules, is necessary to replace the whole safety group, with relative problems of material waste, cost of operations and relative metal disposal.

First, the present invention makes installation operations of the safety group 1 to the water supply network A and to the heating device B particularly simplified. In fact, thanks mainly to the presence of the first fitting 6 removably couplable to the main body 2, it is not necessary to screw the entire safety group 1 to the relative heating device B. In fact, in the installation procedures of the safety group 1 according to the invention, it is necessary to screw only the first fitting 6 to the heating device B and then to insert this first fitting 6 into the first seat S1 and lock it through the insertion of the retainer element 7. These operations are considerably easier than screwing the entire safety group 1 as in the known solutions.

Therefore, also the operations of disassociation of the safety group 1 are simplified and, in fact, the entire replacement process is considerably easier than the known solutions in the art.

The presence of the connection fittings to the water supply network A and to the heating device B allows, furthermore, to produce the main body 2 of the safety group 1 in plastic material, with the exception of some portions of the valve elements housed therein. In this sense, only some portions of the safety group 1, i.e. the first fitting 6, the retainer element 7 and the second fitting 8, are realized in metal material, while the main part of said safety group is realized in plastic material. Consequently, the productive cost of the whole safety group is notably reduced with respect to the known safety groups that are entirely realized in metal.

Furthermore, since only the fittings are realized in metal, it is possible to realize them in metal of higher quality without considerably affecting the production cost of the entire safety group. Typically, safety groups are realized in brass with lead, while the fittings of the safety group according to the present invention are preferably realized in lead-free brass.

Another advantage of the present invention is to reduce also the replacement costs. In fact, in accordance with the method of replacement 200 previously described, it is not necessary to replace the whole safety group 1 previously installed with a new safety group. On the contrary, according to the method of replacement of the present invention, at least the first fitting 6 is kept associated to the heating device B. Only the main body 2, that is preferably realized in plastic material, is replaced with consequent advantages in terms of costs and material disposal.

Also another advantage linked to the presence of fittings is given by the possibility to be used as adapters for any type of interface with the heating device B and with the water supply network A. In fact, the first fitting 6 and the second fitting 8 can act as adapters so that it is not necessary to modify the conformation of the main body 2 of the safety device, but only the typology of the used fittings.

## Claims

1. Safety group (1) for a pressurized heating device (B), preferably a pressurized electric heating device such as an electric boiler, said safety group (1) comprising an internally hollow main body (2) wherein are obtained:
- a first opening (21) suitable for being placed in fluid communication with said pressurized heating device (B);
- a second opening (22) suitable for being placed in fluid communication with a water supply network (A);
- a third opening (23) suitable for being placed in communication with an environment (E), preferably at atmospheric pressure, wherein it is installed said pressurized heating device (B);
said safety group (1) comprising:
- a shut-off valve (3), interposed between said first opening (21) and said second opening (22), openable and closable on command for interrupting the fluid communication between said first opening (21) and said second opening (22);
- a nonreturn valve (4), interposed between said first opening (21) and said second opening (22), configured for allowing a fluid flow entering said pressurized heating device (B) from said second opening (22) to said first opening (21) and for preventing a fluid flow exiting from said pressurized heating device (B) from said first opening (21) to said second opening (22);
- a safety valve (5), interposed between said first opening (21) and said third opening (23), configured for remaining closed when a fluid pressure value at the first opening (21) is lower than a determined risk threshold and for being open when said fluid pressure value at the first opening (21) is higher or equal to said determined risk threshold;
said safety group (1) being **characterized in that** it comprises a first connection fitting (6) comprising a first passage (60) for the fluid passage between said first opening (21) and said pressurized heating device (B), said first fitting (6) being configured for being connected, preferably by means of screwing, to said pressurized heating device (B); said main body (2) comprising, in correspondence of said first opening (21), a first seat (S1) configured for removably housing said first fitting (6);
said safety group (1) comprising also a retainer element (7) suitable for being selectively associated to said main body (2) in correspondence of said first seat (S1) for keeping firmly housed said first fitting (6) in said first seat (S1) and preventing an uncoupling between said first fitting (6) and said main body (2).

2. Safety group (1) according to the preceding claim, wherein said main body (2) is made of plastic material; and/or wherein said first fitting (6) is made of metal material, preferably brass; and/or wherein said retainer element (7) is made of metal material, preferably steel; and/or wherein said first fitting (6) comprises at least a first groove (61, 62) configured for housing at least a first sealing gasket (G1', G1").

3. Safety group (1) according to claim 1 or 2 wherein said first fitting (6) is selectively movable between a first extracted configuration (P1out), wherein is extracted from said first seat (S1), and a first inserted configuration (P1in), wherein is at least partially inserted and housed in said first seat (S1);
and/or wherein the retainer element (7) is configured, when associated to said main body (2), for keeping firmly housed said first fitting (6) in said first seat (S1) through an association by interference of parts when said first fitting (6) is in said first inserted configuration (P1in); and/or wherein the retainer element (7) is configured, when disassociated from said main body (2), for allowing a passage of said first fitting (6) between said first inserted configuration (P1in) and said first extracted configuration (P1out); and/or wherein said first seat (S1) presents at least a first notch (S7) for an insertion of said retainer element (7); and/or wherein said first seat (S1) develops inside said main body (2) for a depth (H) suitable for housing at least partially said first fitting (6).

4. Safety group (1) according to claim 3, wherein said first fitting (6) presents a longitudinal development substantially equal to said depth (H) of the first seat (S1); and/or, when it is in said first inserted configuration (P1in), the first fitting (6) is completely housed in said first seat (S1); and/or wherein said first fitting (6) comprises at least a second notch (67') for the insertion of said retainer element (7), said second notch (67') coinciding, when said first fitting (6) is in said first inserted configuration (P1in), with said at least a first notch (S7) for keeping firmly housed said first fitting (6) in said first seat (S1) through said association by interference of parts when said retainer element (7) is inserted in said first notch (S7) and said second notch (67'); and/or wherein said first passage (60) comprises a portion (60'), preferably an ending portion, with polygonal section configured for facilitating the connection, preferably by means of screwing, to said pressurized heating device (B).

5. Safety group (1) according to claim 3, wherein said first fitting (6) presents a longitudinal development lower than said depth (H) of the first seat (S1); and/or, when it is in said first inserted configuration (P1in), the first fitting (6) is completely housed in said first seat (S1) internally with respect to said first notch (S7); and/or wherein, when the first fitting (6) is in said first inserted configuration (P1in) and said retainer element (7) is inserted in said first notch (S7), said first fitting (6) abuts said retainer element (7) for a firm housing of said first fitting (6) in said first seat (S1) through said association by interference of parts; and/or wherein said first passage (60) comprises a portion (60"), preferably an ending portion, with polygonal section configured for facilitating the connection, by means of screwing, to said pressurized heating device (B).

6. Safety group (1) according to claim 3, wherein said first fitting (6) presents a longitudinal development greater than said depth (H) of the first seat (S1); and/or, when it is in said first inserted configuration (P1in), the first fitting (6) is partially housed in said first seat (S1); and/or wherein said first fitting (6) comprises at least a second notch (67‴) for the insertion of said retainer element (7), said at least a second notch (67‴) coinciding, when said first fitting (6) is in said first inserted configuration (P1in), with said at least a first notch (S7) for keeping firmly housed said first fitting (6) in said first seat (S1) through said association by interference of parts when said retainer element (7) is inserted in said first notch (S7) and said second notch (67‴); and/or wherein said first fitting (6) comprises a portion (60‴), preferably an ending portion suitable for not being contained in said first seat (S1) when the first fitting (6) is in said first inserted configuration (P1in), with external polygonal section configured for facilitating the connection, by means of screwing, to said pressurized heating device (B).

7. Safety group (1) according to any one of the preceding claims comprising also a second connection fitting (8); said second fitting (8) comprising a second passage (80) for the passage of the fluid between said second opening (22) and said water supply network (A), said second fitting (8) being configured for being firmly connected, preferably by means of screwing, to said water supply network (A); said main body (2) comprising, in correspondence of said second opening (22), a second seat (S2) configured for housing said second fitting (8); and/or wherein said second fitting (8) is selectively movable between a second extracted configuration (P2out), wherein it is extracted from said second seat (S2), and a second inserted configuration (P2in), wherein it is at least partially inserted and housed in said second seat (S2); and/or wherein said second fitting (6) comprises at least a second groove (81) configured for housing at least a second sealing gasket (G2).

8. Safety group (1) according to any one of the preceding claims, wherein said safety valve (5) comprises a manual actuation mechanism (50) for allowing the opening of said safety valve (5), and the consequent fluid flow from said first opening (21) to said third opening (23) also when the pressure value in correspondence of the first opening (21) is lower than said determined risk threshold; and/or wherein said shut-off valve (3) comprises a manual command device (30) for commanding the opening and/or the closing of said shut-off valve (3); and/or wherein said safety group (1) comprises also a check device (31) of the correct functioning of the shut-off valve (3) and of the nonreturn valve (4).

9. Safety group (1) according to any one of the preceding claims comprising a directional exhaust (9), associated to said third opening (23) and configured for directing the flow exiting from said third opening (23) when the safety valve (5) is in an opening condition; and/or wherein said risk threshold is comprised between 500 kPa and 1000 kPa, preferably between 600 kPa and 900 kPa, even more preferably is equal to 700 kPa; and/or wherein said shut-off valve (3) comprises a ball valve.

10. Safety group (1) according to any one of the preceding claims wherein said first seat (S1) presents two first notches (S7) for an insertion of said retainer element (7); and/or wherein said retainer element (7) has a substantially "U" shape having two ending portions (71, 72) suitable for being inserted in said two first notches (S7) for keeping firmly housed said first fitting (6) in said first seat (S1) through an association by interference of parts when said first fitting (6) is in said first inserted configuration (P1in).

11. Method of installation (100) of a safety group (1) for a pressurized heating device (B), preferably a pressurized electric heating device such as an electric boiler, comprising the following steps:
- arranging (101) a safety group (1) according to any one of the preceding claims;
- associating (102) said safety group (1) to the water supply network (A) in correspondence of said second opening (22) of the main body (2):
- associating (103), preferably by means of screwing, said first fitting (6) to said pressurized heating device (B);
- inserting (104) said first fitting (6) in said first seat (S1) in correspondence of the first opening (21) of the main body (2);
- constraining (105) said first fitting (6) and said main body (2) by interference of parts, by inserting said retainer element (7).

12. Method of installation (100) according to the preceding claim and claim 7, wherein said step of associating (102) said safety group (1) to the water supply network (A) comprises the following steps:
- associating (102'), preferably by means of screwing, said second fitting (8) to said water supply network (A);
- inserting (102") said second fitting (8) in said second seat (S2) in correspondence of the second opening (22) of the main body (2).

13. Method of installation (100) according to claim 11 or 12 and claim 8 comprising a step of verification (106) of the correct installation of the safety group; said step of verification (106) providing for a closing of said shut-off valve (3) through said command device (30) and an actuation of said verification device (31).

14. Method of replacement (200) of the main body (2) of a safety group (1) installed according to the method of installation (100) according to any one of the claims from 11 to 13 comprising the following steps:
- arranging (201) a new main body (2) of the safety group (1) according to any one of the claims from 1 to 9;
- removing (202) the retainer element (7) from the first seat (S1) of the main body (2) of the safety group (1) previously installed;
- extracting (203) the first fitting (6) from the first seat (S1) of the main body (2) of the safety group (1) previously installed by keeping said first fitting (6) associated to said pressurized heating device (B);
- disassociating (204) the main body (2) of the safety group (1) previously installed from the water supply network (A);
- associating (205) said main body (2) arranged in the step of arranging (201) to the water supply network (A) in correspondence of said second opening (22);
- inserting (206) said first fitting (6) in the first seat (S1) of the main body (2) arranged in the step of arranging (201);
- constraining (207) said first fitting (6) and said new main body (2) by interference of parts, by inserting said retainer element (7).

15. Method of replacement (200) according to the previous claim and to claim 11, wherein said step of disassociating (204) the main body (2) of the safety group (1) previously installed from the water supply network (A) provides for extracting the second fitting (8) from the second seat (S2) of the main body (2) of the safety group (1) previously installed by keeping said second fitting (8) associated to said water supply network (A); and wherein said step of associating (205) said main body (2) arranged in the step of arrangement (201) to the water supply network (A) provides for inserting the second fitting (8) in the second seat (S2) of the main body (2) arranged in the step of arrangement (201);
or wherein said step of arranging (201) a new main body (2) provides that the new main body (2) is arranged with a new second fitting (8) inserted in the second seat (S2) in said second inserted configuration (P2in); and wherein said step of disassociating (204) the main body (2) of the safety group (1) previously installed from the water supply network (A) provides for keeping the second fitting (8) in the second inserted configuration (P2in) within the second seat (S2) of the main body (2) of the safety group (1) previously installed; and wherein said step of associating (205) said new main body (2) to the water supply network (A) provides for associating the second fitting (8) of the new main body (2) to the water supply network (A).
